# EUROPÄISCHE PATENTSCHRIFT

(11) **EP 0 297 229 B1**
(45) Veröffentlichungstag und Bekanntmachung des Hinweises auf die Patenterteilung: **16.06.1993**
(21) Anmeldenummer: 88106031.3
(22) Anmeldetag: 15.04.1988
(51) Int. Cl.: H01M 2/10

(54) **Batterie**
Battery
Batterie

(30) Priorität: 27.06.1987 DE 8708948 U
(43) Veröffentlichungstag der Anmeldung: 04.01.1989
(73) Patentinhaber: Accumulatorenwerke Hoppecke Carl Zoellner & Sohn GmbH & Co. KG, D-59914 Brilon (DE)
(72) Erfinder: Cramer, Wilhelm, D-5790 Brilon 3 (DE); Hampe, Werner, D-3538 Marsberg 12 (DE); Bernardi, Walter, Dipl.-Ing., D-5790 Brilon 1 (DE)
(74) Vertreter: Stenger, Watzke & Ring Patentanwälte

(56) Entgegenhaltungen:
- DE-U- 8 708 948
- FR-A- 2 233 719
- FR-A- 2 249 451
- US-A- 3 424 344
- US-A- 4 507 820
- PATENT ABSTRACTS OF JAPAN, Band 7, Nr. 36 (E-158)[1181], 15. Februar 1983; & JP-A-57 189 453 (YUASA DENCHI K.K.) 20-11-1982

## Beschreibung

Die Erfindung betrifft eine Batterie mit einem einen Batteriedeckel aufweisenden Kunststoffgehäuse, an dem zwei flexible Tragegriffe angeordnet sind, die im Nichtgebrauchszustand im Batteriedeckel integriert sind und im wesentlichen unterhalb der Deckfläche des Batteriedeckels parallel zu diesem verlaufen.

Eine derartige Batterie mit einem einen Batteriedeckel aufweisenden Kunststoffgehäuse ist aus der JP-A-57 189 453 bekannt. In diesem Batteriedeckel sind zwei flexible Tragegriffe angeordnet. Diese bestehen dabei jeweils aus einem U-förmigen Grundelement mit zwei Schenkeln, die durch ein Basiselement miteinander verbunden sind. Zur Befestigung der Tragegriffe im Batteriedeckel weist dieser eine oberseitige, rahmenartige Ausnehmung auf. Im Bereich der Seitenwand des Batteriedeckels sind zwei Durchbrechungen vorgesehen, durch die die flexiblen Schenkel des U-förmigen Grundelements des jeweiligen Tragegriffes gesteckt werden. Auf die freien Enden der beiden Schenkel wird dann eine Griffleiste aufgesteckt. Im Nichtgebrauchszustand werden die so ausgebildeten Tragegriffe oberseitig in die entsprechenden rahmenartigen Ausnehmungen im Batteriedeckel eingelegt.

Davon ausgehend liegt der Erfindung die **Aufgabe** zugrunde, die Festlegung der Tragegriffe im Batteriedeckel zu vereinfachen und zu verbessern.

Als technische **Lösung** wird mit der Erfindung vorgeschlagen, daß der Batteriedeckel aus einem Oberdeckel sowie aus einem Unterdeckel besteht, die miteinander verschweißt sind und zwischen denen die Tragegriffe jeweils festgelegt sind.

Mittels einer nach dieser technischen Lehre ausgebildeten Batterie lassen sich die Tragegriffe auf überaus einfache Weise im Batteriedeckel festlegen, indem die Tragegriffe zunächst am Oberdeckel vormontiert und dann die beiden Deckel miteinander verschweißt werden, so daß die Tragegriffe jeweils zwischen dem Oberdeckel und dem Unterdeckel fastgelegt sind. Diese Festlegung der Tragegriffe im Batteriedeckel läßt sich unkompliziert maschinell durchführen.

In einer vorteilhaften Weiterbildung wird vorgeschlagen, daß die Tragegriffe jeweils U-förmig ausgebildet und mit ihren beiden freien Enden jeweils im Batteriedeckel festgelegt sind, daß die Tragegriffe im Bereich dieser freien Enden dabei jeweils Verdickungen aufweisen, daß die Tragegriffe im Bereich dieser Verdickungen an der Unterseite des Oberdeckels angeordnet sind und daß nach oben ragende Haltenocken am Unterdeckel hinter die Verdickungen der Tragegriffe greifen und diese vor Herausziehen sichern. Dies hat den Vorteil, daß durch die Festlegung der beiden freien Enden des Tragegriffes im Batteriedeckel das eigentliche Griffmittelteil des Tragegriffes bei Bedarf auf einfache Weise nach oben gebogen werden kann, wobei die Schenkel des Tragegriffes eine Umbiegung um 90° nach oben erfahren. Nach der Montage der Batterie werden dann die Tragegriffe wieder in ihre Ausgangsstellung im Batteriedeckel zurückgebogen. Die Kombination von Verdickungen an den Tragegriffen und nach oben ragende Haltenocken am Unterdeckel des Batteriedeckels ermöglicht auf einfache Weise eine Festlegung der Tragegriffe innerhalb des Batteriedeckels, wobei jederzeit die Tragegriffe vor einem ungewollten Herausziehen aus dem Batteriedeckel gesichert sind.

Vorzugsweise besteht der Oberdeckel aus zwei zueinander höhenversetzten Oberdeckelplatten, wobei die Tragegriffe im Bereich ihrer Verdickungen jeweils an der Unterseite der oberen Oberdeckelplatten angeordnet sind und ansonsten auf der unteren Oberdeckelplatte aufliegen. Dadurch wird die Vormontage der Tragegriffe am Oberdeckel erheblich erleichtert, da die Tragegriffe insbesondere mit ihren Griffmittelteilen auf der unteren Oberdeckelplatte aufliegen können, wo sie vorzugsweise zusätzlich durch seitliche Begrenzungen lagefixiert werden können. Lediglich im Bereich der Haltenocken des Unterdeckels im Befestigungsbereich der Tragegriffe liegen diese an der Unterseite der oberen Oberdeckelplatte an. Auf diese Weise kann das Oberteil des Batteriedeckels, bestehend aus dem Oberdeckel mit den Tragegriffen sehr einfach auf den Unterdeckel aufgesetzt und mit diesem verschweißt werden. Dadurch vereinfacht sich nicht nur die Gesamtmontage der Tragegriffe im Batteriedeckel, sondern die Tragegriffe sind auch in optimaler Weise im Batteriedeckel integriert und stören kaum.

Weiterhin wird mit der Erfindung vorgeschlagen, daß die Tragegriffe jeweils aus einem Thermoplast aus einem modifizierten Elastomer bestehen. Dies hat den Vorteil, daß sich die Tragegriffe nicht nur sehr gut in ihre Gebrauchsstellung biegen lassen, sondern daß sie auch neben einer großen Haltbarkeit beispielsweise sehr gut in die seitlichen Begrenzungen des Batteriedeckels eingedrückt und so im Batteriedeckel bzw. auf diesem gesichert werden können. Durch die Elastizität der Tragegriffe ist dabei die Haltekraft durch die Einquetschung groß genug, um auch bei heftigen Stößen ein unbeabsichtigtes Herauslösen aus den Begrenzungen zu verhindern.

Vorzugsweise weisen die Schenkel der U-förmigen Tragegriffe einen rechteckigen Querschnitt auf, was sich positiv auf das Biegeverhalten der Tragegriffe in die Gebrauchsstellung sowie wieder zurück in die Nichtgebrauchsstellung auswirkt.

Um die Tragegriffe und dabei insbesondere deren Griffmittelteile im Batteriedeckel sicher zu fixieren, wird gemäß einer weiteren Weiterbildung der Erfindung vorgeschlagen, daß die Tragegriffe jeweils in seitlichen Begrenzungen des Batteriedeckels lösbar eingedrückt sind. Um die Tragegriffe in die Gebrauchsstellung nach oben zu biegen, werden sie lediglich aus den seitlichen Begrenzungen herausgelöst, die zu diesem Zweck vorzugsweise Aussparungen aufweisen, die als Griffbereiche für die Finger des Benutzers dienen. Nach der Montage der Batterie werden die Tragegriffe wieder nach unten zwischen die seitlichen Begrenzungen des Batteriedeckels gedrückt und so zwischen diesen seitlichen Begrenzungen eingequetscht, daß sich die Tragegriffe nicht von allein vom Batteriedeckel lösen können.

Weitere Einzelheiten und Vorteile ergeben sich aus der nachfolgenden Beschreibung der zugehörigen Zeichnung, in der eine bevorzugte Ausführungsform einer erfindungsgemäßen Batterie mit zwei im Batteriedeckel integrierten flexiblen Tragegriffen schematisch dargestellt ist. In der Zeichnung zeigt:
- Fig. 1: eine Seitenansicht der Batterie, teilweise im Schnitt;
- Fig. 2: eine Ansicht von oben auf die Batterie aus Fig. 1, ebenfalls teilweise im Schnitt.

Die Batterie, die beispielsweise eine Starterbatterie für Kraftfahrzeuge sein kann, besteht aus einem im wesentlichen quaderförmigen Kunststoffgehäuse 1 mit einem Batteriedeckel 2, dessen elektrische Anschlußpole jedoch nicht dargestellt sind.

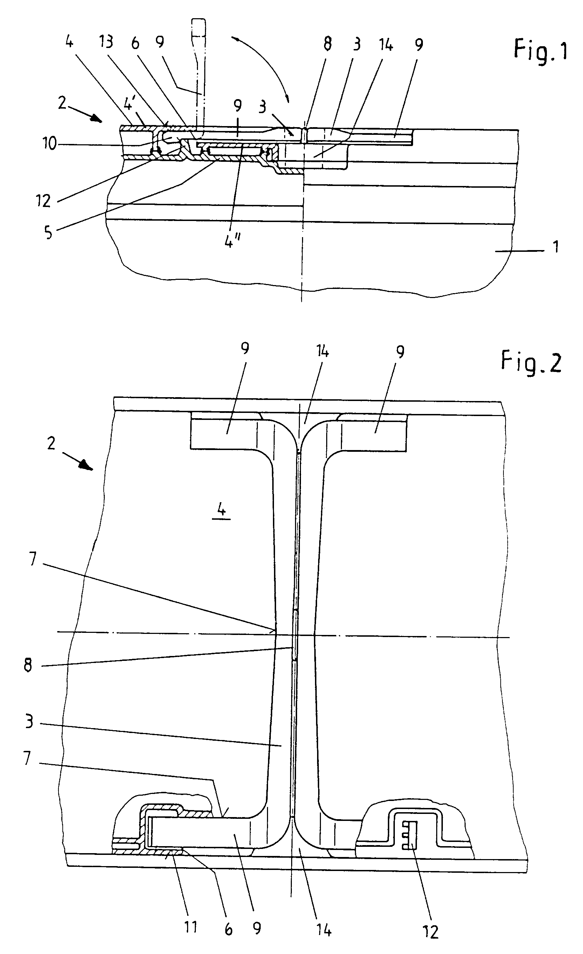

In dem Batteriedeckel 2 sind zwei Tragegriffe 3 integriert, die aus einem flexiblen Material insbesondere aus einem Thermoplast aus einer Elastomer-Modifikation bestehen. In dem dargestellten Ausführungsbeispiel sind die beiden Tragegriffe 3 jeweils U-förmig ausgebildet, wobei die freien Enden der Schenkel der U-förmigen Tragegriffe 3 innerhalb des Batteriedeckels 2 festgelegt sind. Zu diesem Zweck besteht der Batteriedeckel 2 aus einem Oberdeckel 4 sowie aus einem Unterdeckel 5, die entlang entsprechender Stege miteinander verschweißt sind. Der Oberdeckel 4 ist hinwiederum in eine obere Oberdeckelplatte 4′ sowie in eine untere Oberdeckelplatte 4′′ unterteilt, die zueinander höhenversetzt sind, wie insbesondere in Fig. 1 zu erkennen ist. Zwischen der oberen Oberdeckelplatte 4′ und der unteren Oberdeckelplatte 4′′ des Oberdeckels ist eine Durchführung 6 gebildet, deren Zweck später erläutert wird.

Auf der Oberseite der unteren Oberdeckelplatte 4′′ sind seitliche Begrenzungen für den U-förmigen Tragegriff 3 ausgebildet, wobei zwischen den beiden Tragegriffen 3 noch ein Klemmsteg 8 ausgebildet ist, der ebenfalls als seitliche Begrenzung für die Tragegriffe 3 dient.

Zum Befestigen der Tragegriffe 3 in dem Batteriedeckel 2 weisen die freien Enden der Schenkel 9 der Tragegriffe 3 jeweils Verdickungen 10 auf. Zur Montage der Tragegriffe 3 werden diese Verdickungen 10, die zugleich auch die Funktion von angeschrägten Führungsnocken haben, in die Durchführungen 6 im Oberdeckel 4 geschoben, so daß der Bereich der Tragegriffe 3 mit den Verdickungen 10 an der Unterseite der oberen Oberdeckelplatte 4′ anliegt, wie in Fig. 1 zu erkennen ist. Die restlichen Bereiche der Tragegriffe 3 kommen dabei auf der unteren Oberdeckelplatte 4′′ des Oberdeckels 4 zur Auflage und werden zwischen den Klemmsteg 7 und die seitlichen Begrenzungen 7 eingedrückt. Ein seitliches Verrutschen der Tragegriffe 3 ist durch die seitlichen Begrenzungen 7 und einen Überfallrand 11 des Oberdeckels 4 nicht möglich.

Der so mit den beiden Tragegriffen 3 vormontierte Oberdeckel 4 wird nunmehr auf den Unterdeckel 5 aufgeschweißt. Um die Tragegriffe 3 in ihren Positionen zu fixieren, weist der Unterdeckel 5 nach oben weisende Haltenocken 12 auf, die hinter den Verdickungen 10 der Tragegriffe 3 so zu liegen kommen, daß die Tragegriffe 3 aus dem Batteriedeckel 2 nicht herausgezogen werden können. Gleichzeitig werden die Schenkel 9 der Tragegriffe 3 vor die oberen Oberdeckelplatten 4′ des Oberdeckels 4 gedrückt.

Die fertig montierte Batterie mit den beiden Tragegriffen 3 ist in Fig. 1 dargestellt. Im Nichtgebrauchszustand der Tragegriffe 3 sind diese im Batteriedeckel 2 integriert und verlaufen im wesentlichen unterhalb der Deckfläche 13 des Batteriedeckels 2 sowie parallel zu diesem, indem sie auf ihm aufliegen. Dies ist in Fig. 1 mittels der durchgezogenen Linien dargestellt.

Um die Tragegriffe 3 in den Gebrauchszustand zu bringen, greifen die Finger des Benutzers in eine Aussparung 14 ein, so daß die Tragegriffe 3 aus ihren seitlichen Begrenzungen 7 herausgelöst und senkrecht nach oben gebogen werden können, wie dies in Fig. 1 durch die strichpunktierte Linie angedeutet ist. Wenn die Tragegriffe 3 nach der Montage der Batterie nicht mehr gebraucht werden, werden sie wieder nach unten zwischen die seitlichen Begrenzungen 7 sowie den Klemmsteg 8 gedrückt, so daß die Tragegriffe 3 in dieser Position im Batteriedeckel 2 wieder fixiert sind.

### Bezugszeichenliste

- 1: Kunststoffgehäuse
- 2: Batteriedeckel
- 3: Tragegriff
- 4: Oberdeckel
- 4': obere Oberdeckelplatte
- 4'': untere Oberdeckelplatte
- 5: Unterdeckel
- 6: Durchführung
- 7: seitliche Begrenzung
- 8: Klemmsteg
- 9: Schenkel
- 10: Verdickung
- 11: Überfallrand
- 12: Haltenocken
- 13: Deckfläche
- 14: Aussparung

## Patentansprüche

1. Batterie mit einem einen Batteriedeckel (2) aufweisenden Kunststoffgehäuse (1), an dem zwei flexible Tragegriffe (3) angeordnet sind, die in Hichtgebrauchszustand im Batteriedeckel (2) integriert sind im wesentlichen unterhalb der Deckfläche (13) des Batteriedeckels (2) parallel zu diesem verlaufen,
**dadurch gekennzeichnet,**
daß der Batteriedeckel (2) aus einem Oberdeckel (4) sowie aus einem Unterdeckel (5) besteht, die miteinander verschweißt sind und zwischen denen die Tragegriffe (3) jeweils festgelegt sind.

2. Batterie nach Anspruch 1, dadurch gekennzeichnet, daß die Tragegriffe (3) jeweils U-förmig ausgebildet und mit ihren beiden freien Enden jeweils im Batteriedeckel (2) festgelegt sind, daß die Tragegriffe (3) im Bereich dieser freien Enden dabei jeweils Verdickungen (10) aufweisen, daß die Tragegriffe (3) im Bereich dieser Verdickungen (10) an der Unterseite des Oberdeckels (4) angeordnet sind und daß nach oben ragende Haltenocken (12) am Unterdeckel (5) hinter die Verdickungen (10) der Tragegriffe (3) greifen und diese vor Herausziehen sichern.

3. Batterie nach Anspruch 2, dadurch gekennzeichnet, daß der Oberdeckel (4) aus zwei zueinander höhenversetzten Oberdeckelplatten (4',4'') besteht, wobei die Tragegriffe (3) im Bereich ihrer Verdickungen (10) jeweils an der Unterseite der oberen Oberdeckelplatten (4') angeordnet sind und ansonsten auf der unteren Oberdeckelplatte (4'') aufliegen.

4. Batterie nach einem der Ansprüche 1 bis 3, dadurch gekennzeichnet, daß die Tragegriffe (3) jeweils aus einem Thermoplast aus einem modifizierten Elastomer bestehen.

5. Batterie nach einem der Ansprüche 2 bis 4, dadurch gekennzeichnet, daß die Schenkel (9) der U-förmigen Tragegriffe (3) einen rechteckigen Querschnitt aufweisen.

6. Batterie nach einem der Ansprüche 1 bis 5, dadurch gekennzeichnet, daß die Tragegriffe (3) jeweils in seitlichen Begrenzungen (7) des Batteriedeckels (2) lösbar eingedrückt sind.

7. Batterie nach Anspruch 6, dadurch gekennzeichnet, daß die seitlichen Begrenzungen (7) Aussparungen (14) aufweisen.

## Claims

1. Battery with a plastic housing (1) having a battery cover (2), on which housing two flexible carrying handles (3) are disposed, which carrying handles, when not being used, are integrated into the battery cover (2) and extend essentially below the cover surface (13) of the battery cover (2) and parallel thereto, characterised in that the battery cover (2) consists of an upper cover (4) as well as of a lower cover (5) which are welded together and between which the carrying handles (3) are each fixed.

2. Battery according to Claim 1, characterised in that the carrying handles (3) are each of U-shaped design and are fixed with their two free ends in each case in the battery cover (2), in that the carrying handles (3) have in each case enlargements (10) in the region of these free ends, in that the carrying handles (3) are disposed on the lower side of the upper cover (4) in the region of these enlargements (10) and in that upwardly projecting holding lugs (12) on the lower cover (5) engage behind the enlargements (10) of the carrying handles (3) and secure them against being pulled out.

3. Battery according to Claim 2, characterised in that the upper cover (4) consists of two upper cover plates (4', 4'') which are vertically offset with respect to one another, the carrying handles (3) being disposed in the region of their enlargements (10) in each case on the lower side of the top upper cover plates (4') and otherwise lie on the bottom upper cover plate (4'').

4. Battery according to one of Claims 1 to 3, characterised in that the carrying handles (3) consist in each case of a thermoplastic consisting of modified elastomer.

5. Battery according to one of Claims 2 to 4, characterised in that the legs (9) of the U-shaped carrying handles (3) have a rectangular cross section.

6. Battery according to one of Claims 1 to 5, characterised in that the carrying handles (3) are in each case detachably pushed into lateral borders (7) of the battery cover (2).

7. Battery according to Claim 6, characterised in that the lateral borders (7) have recesses (14).

## Revendications

1. Batterie comprenant un boîtier en matière plastique (1) qui est muni d'un couvercle de batterie (2) et sur lequel sont montées deux poignées flexibles (3) qui, lorsqu'elles ne sont pas utilisées, sont intégrées dans le couvercle de batterie (2) et s'étendent pour l'essentiel en dessous de la surface de recouvrement (13) du couvercle de batterie (2), parallèlement à ce dernier, caractérisée en ce que le couvercle de batterie (2) est constitué d'un couvercle supérieur (4) et d'un couvercle inférieur (5) qui sont soudés l'un à l'autre et entre lesquels peut être fixée chacune des poignées (3).

2. Batterie selon la revendication 1, caractérisée en ce que les poignées (3) sont chacune conçues en forme de U et fixées par leurs deux extrémités libres dans le couvercle de batterie (2), en ce que les poignées (3) comportent chacune des surépaisseurs (10) dans la zone de ces extrémités libres, en ce que, dans la zone de ces surépaisseurs (10), les poignées (3) se trouvent contre la face inférieure du couvercle supérieur (4), et en ce que des arrêtoirs (12) qui font saillie vers le haut et qui sont disposés sur le couvercle inférieur (5) s'engagent derrière les surépaisseurs (10) des poignées (3) et les empêchent de sortir.

3. Batterie selon la revendication 2, caractérisée en ce que le couvercle supérieur (4) se compose de deux plaques (4', 4'') de couvercle supérieur décalées en hauteur l'une par rapport à l'autre, les poignées (3) se trouvant chacune, dans la zone de leurs surépaisseurs (10), contre la face inférieure des plaques supérieures (4') du couvercle supérieur et reposant, pour le reste, sur la plaque inférieure (4'') du couvercle supérieur.

4. Batterie selon l'une des revendications 1 à 3, caractérisée en ce que les poignées (3) sont chacune réalisées dans une matière thermoplastique en élastomètre modifié.

5. Batterie selon l'une des revendications 2 à 4, caractérisée en ce que les branches (9) des poignées en U (3) présentent une section transversale rectangulaire.

6. Batterie selon l'une des revendications 1 à 5, caractérisée en ce que les poignées (3) sont chacune enfoncées de manière amovible dans des butées latérales (7) du couvercle de batterie (2).

7. Batterie selon la revendication 6, caractérisée en ce que les butées latérales (7) comportent des évidements (14).
